Europäisches Patentamt

European Patent Office

Office européen des brevets

(19)

(11) Veröffentlichungsnummer: **0 249 101 B1**

(12) # EUROPÄISCHE PATENTSCHRIFT

(45) Veröffentlichungstag der Patentschrift: **02.01.92**

(21) Anmeldenummer: **87107784.8**

(22) Anmeldetag: **29.05.87**

(51) Int. Cl.⁵: **C08L 69/00**, C08K 3/04,
//(C08L69/00,67:02)

Die Akte enthält technische Angaben, die nach
dem Eingang der Anmeldung eingereicht wurden
und die nicht in dieser Patentschrift enthalten sind.

(54) **Kohlenstoff-haltige Formkörper.**

(30) Priorität: **10.06.86 DE 3619094**

(43) Veröffentlichungstag der Anmeldung:
**16.12.87 Patentblatt 87/51**

(45) Bekanntmachung des Hinweises auf die
Patenterteilung:
**02.01.92 Patentblatt 92/01**

(84) Benannte Vertragsstaaten:
**DE FR GB IT NL**

(56) Entgegenhaltungen:
EP-A- 0 032 375
EP-A- 0 209 033

PATENT ABSTRACTS OF JAPAN, Band 7, Nr.
248 (C-193)[1393], 4. November 1983; & JP-
A-58 136 652

PATENT ABSTRACTS OF JAPAN, Band 9, Nr.
1 (C-259)[1724], 5. Januar 1985; & JP-A-59 155
459

(73) Patentinhaber: **BAYER AG**

**W-5090 Leverkusen 1 Bayerwerk(DE)**

(72) Erfinder: **Dziurla, Heinz-Jürgen, Dipl.-Ing.
Solinger Strasse 35
W-5090 Leverkusen 1(DE)**
Erfinder: **Freitag, Dieter, Dr.
Hasenheide 10
W-4150 Krefeld 1(DE)**
Erfinder: **Waldenrath, Werner, Dipl.-Ing.
Maastrichter Strasse 40-44
W-5000 Koeln 1(DE)**
Erfinder: **Burkhardt, Claus, Dr.
Hasenheide 12
W-4150 Krefeld 1(DE)**
Erfinder: **Schulte, Bernhard, Dr.
Doppelfeldstrasse 15
W-4150 Krefeld 1(DE)**

## Beschreibung

Gegenstand der vorliegenden Erfindung sind Kohlenstoffhaltige Formkörper, die nach dem Extrusionsverfahren oder nach dem Spritzgußverfahren hergestellt sind, die dadurch gekennzeichnet sind, daß sie

a) 40 Gew.-% bis 85 Gew.-% an thermoplastischen Polycarbonaten,

b) 35 Gew.-% bis 5 Gew.-% an thermoplastischen Polyalkylenterephthalaten, und

c) 35 Gew.-% bis 10 Gew.-%, vorzugsweise 30 Gew.-% bis 15 Gew.-%, an Ruß und Graphit enthalten, wobei das Gewichtsverhältnis von Ruß zu Graphit zwischen 5:1 und 1:3, vorzugsweise zwischen 3:2 und 2:3 liegt, und wobei die Summe der Gewichtsprozente der Komponenten a) + b) + c) jeweils 100 Gew.-% ist.

Erfindungsgemäße Formkörper sind beispielsweise Extrusionsfolien und Spritzgußartikel jeder Art. Sie zeichnen sich durch antistatisches Verhalten bis hin zu einer gewissen Leitfähigkeit und außerdem durch gute Zähigkeit, Reißfestigkeit und Wärmeformbeständigkeit aus. Somit eignen sich die erfindungsgemäßen Formkörper beispielsweise zum Verpacken von elektronischen Meßgeräten oder von elektronischen Bauteilen, insbesondere von solchen, die durch elektrostatische Aufladung gefährdet sind, beispielsweise in Computern, Fernsehgeräten u.ä.

Gegenstand der vorliegenden Erfindung ist außerdem ein Verfahren zur Herstellung der Kohlenstoff-haltigen Formkörper, das dadurch gekennzeichnet ist, daß man das thermoplastische Polycarbonat mit dem Ruß und dem Graphit innig vermischt und nach Zusatz des thermoplastischen Polyalkylenterephthalats das Gesamtgemisch zu den gewünschten Formkörpern extrudiert oder spritzgießt.

Gegendstand der Erfindung sind außerdem die nach dem erfindungsgemäßen Verfahren erhältlichen Kohlenstoff-haltigen Formkörper.

Gemäß US-Patent 3 218 372 sind Mischungen aus Polycarbonaten mit Polyalkylenterephthalaten bekannt. Aus den Mischungen können Filme hergestellt werden. (Spalte 4, Zeile 9 von US-Patent 3 218 372). Der Zusatz von Ruß oder Graphit ist nicht beschrieben.

Gemäß JP-PS 932 197 sind Mischungen aus 50 Teilen oder mehr von Polycarbonaten und 50 Teilen oder weniger von Polybutylenterephthalaten bekannt. Füllstoffe wie beispielsweise Ruß, $TiO_2$, Glasfasern etc. und andere Farbpigmente können zugesetzt werden.

Die Herstellung von Filmen ist nicht beschrieben.

Gemäß japanischer Patentanmeldung Nr. 47/121683 sind Filme aus Mischungen von 100 Gew.-Teilen Bisphenol-A-Polycarbonat und 10 bis 70 Gew.-Teilen Polybutylenterephthalat bekannt. Pigmente, Farbstoffe, anorganische oder organische Additive wie Stabilisatoren, Füllstoffe oder ähnliches können zugemischt werden. Ruß oder Graphit sind als Füllstoffe bzw. Pigmente nicht erwähnt.

Als thermoplastische Polycarbonate im Sinne der vorliegenden Erfindung kommen die durch Umsetzung von Diphenolen, insbesondere von Dihydroxydiarylalkanen, mit Phosgen oder Diestern der Kohlensäure erhältlichen Polykondensate in Betracht, wobei außer den unsubstituierten Dihydroxydiarylalkanen auch solche geeignet sind, deren Arylreste in o- und/oder m-Stellung zur Hydroxylgrupe Methylgruppen oder Halogenatome tragen. Ebenso sind verzweigte Polycarbonate geeignet.

Die in Rede stehenden thermoplastischen Polycarbonate haben mittlere Gewichtsmittelmolekulargewichte $\overline{M}_w$ zwischen 22 000 und 50 000, vorzugsweise zwischen 28 000 und 40 000, ermittelt durch Messungen der rel. Viskosität in $CH_2Cl_2$ bei 25° C und einer Konzentration von 0,5 g pro 100 ml.

Geeignete Diphenole sind z.B. Hydrochinon, Resorcin, 4,4′-Dihydroxydiphenyl, Bis-(hydroxy-phenyl)-alkane wie beispielsweise $C_1$-$C_8$-Alkylen-bzw. $C_2$-$C_8$-Alkylidenbisphenole, Bis-(hydroxyphenyl)-cycloalkane wie beispielsweise $C_5$-$C_{15}$-Cycloalkylen-bzw. $C_5$-$C_{15}$-Cycloalkylidenbisphenole, Bis-(hydroxy-phenyl)-sulfide, -ether, -ketone, -sulfoxide oder -sulfone, Ferner $\alpha,\alpha'$-Bis-(hydroxyphenyl)-diisopropylbenzol sowie die entsprechenden kernalkylierten bzw. kernhalogenierten Verbindungen. Bevorzugt sind Polycarbonte auf Basis Bis-(4-hydroxy-phenyl)-propan-2,2 (Bisphenol A), Bis-(4-hydroxy-3,5-dichlor-phenyl)-propan-2,2 (Tetrachlorbisphenol A), Bis-(4-hydroxy-3,5-dibrom-phenyl)-propan-2,2(Tetrabrombisphenol A), Bis-(4-hydroxy-3,5-dimethyl-phenyl)-propan-2,2 (Tetramethylbisphenol A), Bis-(4-hydroxy-phenyl)-cyclohexan-1,1 (Bisphenol Z) sowie auf Basis von Dreikernbisphenolen wie $\alpha,\alpha'$-Bis-(4-hydroxyphenyl)-p-diisopropylbenzol.

Weitere für die Herstellung der Polycarbonate geeignete Diphenole sind in den US-Patenten 2 970 131, 2 991 273, 2 999 835, 2 999 846, 3 028 365, 3,062 781, 3 148 172, 3 271 367 und 3 275 601 beschrieben.

Die aromatischen Polycarbonate können in bekannter Weise durch den Einbau geringer Mengen, vorzugsweise von Mengen zwischen 0,05 und 2,0 Mol-% (bezogen auf eingesetzte Diphenole), an dreioder mehr als dreifunktionellen Verbindungen, insbesondere solchen mit drei oder mehr als drei phenolischen Hydroxygruppen, verzweigt sein.

Polycarbonate dieser Art sind z.B. in den deutschen Offenlegungsschriften 1 570 533, 1 595 762, der britischen patentschrift 1 079 821, der US-Patentschrift Re 27 682 und in dem deutschen Patent 2 500 092 beschrieben.

Einige der verwendbaren Verbindungen mit drei oder mehr als drei phenolischen Hydroxygrupen sind beispielsweise 2,4-Bis-(hydroxyphenyl-isopropyl)-phenol, 2,6-Bis-(2'-hydroxy-5'-methyl-benzyl)-4-methylphenol, 2-(4-Hydroxyphenyl)-2-(2,4-dihydroxyphenyl)-propan und 1,4-Bis-(4,4''-dihydroxytriphenyl-methyl)-benzol.

Einige der sonstigen dreifunktionellen Verbindungen sind 2,4-Dihydroxybenzoesäure, Trimesinsäure, Cyanurchlorid und 3,3-Bis-(4-hydroxy-3-methyl-phenyl)-2-oxo-2,3-dihydroindol (Isatin-bis-kresol).

Thermoplastische Polyalkylenterephthalate im Sinne der Erfindung sind Polyester aus Terephthalsäure und einem aliphatischen Diol, vorzugsweise aus der Gruppe Butandiol-1,4 Ethandiol, Cyclohexandimethanol-1,4 und insbesondere Butandiol-1,4.

Die erwähnten Terephthalate können vorzugsweise neben den aufgeführten Glykolresten bis zu 20 Mol-% Reste anderer aliphatischer Diole mit 3 bis 12 C-Atomen oder cycloaliphatischer Diole mit 6 bis 21 C-Atomen enthalten, z.B. solche auf Basis von Propandiol-1,3, Neopentylglykol, Pentandiol-1,5, Hexandiol-1,6, 3-Methylpentandiol-2,4, 2-Methylpentandiol- 2,4- 2,2-4-Trimethylpentandiol-1,3.

Neben Terephthalsäureestern können bis zu 15 Mol-% anderer Dicarbonsäurereste, z.B. Isophthalsäure, Adipinsäure, Succinsäure, Sebacinsäure, Naphthalin-2,6-dicarbonsäure, Diphenylcarbonsäure, Azelainsäure, Cyclohexandiessigsäure enthalten sein. Die Polyalkylenglykolterephthalate können nach bekannten Verfahren beispielsweise aus Terephthalsäuredialkylester und dem entsprechenden Diol durch Umesterung erhalten werden (siehe z.B. US-Patente 2 647 885, 2 643 989, 2 534 028, 2 578 660, 2 742 494, 2 901 466). Zur Herstellung geht man beispielsweise von einem niederen Alkylester der Terephthalsäure, vorzugsweise dem Dimethylester, aus und estert diesen mit einem Überschuß an Diol in Gegenwart geeigneter Katalysatoren zum Bishydroxyalkylester der Terephthalsäure um. Dabei wird die Temperatur ausgehend von 140° C auf 210 - 220° C erhöht. Der freigesetzte Alkohol wird abdestilliert. Die Aufkondensation erfolgt anschließend bei Temperaturen von 210 - 180° C, der Druck wird dabei stufenweise bis auf weniger als 1 Torr erniedrigt, wobei das überschüssige Diol abdestilliert wird.

Die Molekulargewichte $\overline{M}_w$ der Terephthalate liegen zwischen 30 000 und 80 000, die Molekulargewichte $\overline{M}_w$ der Mischpolyester aus Terephthal- und Isophthalsäuren liegen auch zwischen 30 000 und 80 000. Die Bestimmung des $\overline{M}_w$ erfolgt durch Messung der intrinsic-Viskosität (Grenzviskositätszahl, auf Konzentration 0 extrapolierter Wert der reduzierten spezifischen Viskosität)-I.V-in Phenol/o-Dichlorbenzol (1/1) bei 25° C als 5 %ige Lösung, bzw. über den RSV-Wert (reduzierte spezifische Viskosität), wobei es sich hier um den durch die Konzentration der gemessenen Lösung dividierten Betrag der spezifischen Viskosität handelt. Die Betimmung des RSV-Wertes wird in Phenol/Tetrachlorethan (60/40) bei 20° C mit einer 23 %igen Lösung vorgenommen. Die I.V-Werte liegen im allgemeinen zwischnen 0,85 und 1,25.

Besonders bevorzugte aliphatische thermoplastische Polyester sind Polybutylenterephthalate mit $\overline{M}_w$ zwischen 30 000 und 60 000.

Erfindungsgemäß geeignete Ruße sind Gasruße, Furnace-Ruße oder Flammruße mit mittleren Primärpartikelgrößen, die im allgemeinen elektronenmikroskopisch ermittelt werden, von unter 200 Nanometer (nm), vorzugsweise unter 100 Nanometer (nm) und insbesondere mit einer mittleren Primärteilchengröße von kleiner als 50 Nanometer.

Erfindungsgemäß geeignete Graphite sind Graphitpulver oder Graphitstäube, die beispielsweise als Elektrodengraphit in einem breiten Kornspektrum mit Partikeldurchmessern bis zu 5 mm zur Verfügung stehen, wobei Graphitpulver mit mittleren Teilchengrößen bis zu 1 mm bevorzugt und insbesondere bis zu 0,5 mm verwendet werden.

Bevorzugte Ruße sind sogenannte Leitfähigkeitsruße, die außer einer sehr geringen Primärteilchengröße eine große äußere und innere Oberfläche, d.h. hohe Porosität und somit hohe BET-Oberflächen bei der $N_2$-Adsorption und hohe Dibutylphthalat (DBP)-Adsorptionswerte aufweisen und weiterhin hochstrukturiert sind, d.h. starke Agglomerationen oder Aggregationen von einzelnen Rußteilchen zu größeren Gebilden wie z.B. Ketten aufweisen, wobei die BET-Oberflächen der Ruße im allgemeinen größer sind als 20 m²/g und die DBP-Adsorption oberhalb von 40 ml pro 100 g Ruß liegen.

Insbesondere geeignet sind Leitfähigkeitsruße mit BET-Oberflächen von über 50 m²/g und DBP-Adsorptionen von größer als 80 ml/100 g bei mittleren Primärpartikelgrößen von unter 50 Nanometer (nm). Derartige elektrisch leitfähige Ruße sind als handelsübliche Spezialruße mit ausgeprägten Structuren und hohen elektrischen Leitfähigkeiten verfügbar.

Die Vermischung des Rußes und des Graphits mit dem thermoplastischen Polycarbonat kann beispielsweise durch Pulvermischtechnologie erfolgen, indem man Polycarbonatpulver mit Ruß und Graphit bei Raumtemperatur vermischt und anschließend mittels eines Extruders bei etwa 250° C bis etwa 300° C zu Granulat extrudiert. Alternativ kann das Polycarbonat mit dem Ruß und dem Graphit über geeignete Kneter und Dosierung der Mischungskomponenten gemischt und direkt granuliert werden, wobei wiederum etwa Temperaturen von 250° C bis 300° C eingehalten werden, die Granulierung jedoch unter Anlegung eines Vakuums erfolgen muß, welches mittels Entgasungseinrichtungen erreicht wird.

Die Extrusion der Polycarbonat-Ruß-Graphitmischungen, welche wie vorstehend bechrieben als Granulat anfallen, mit dem thermoplastischen Polyalkylenterephthalat erfolgt im allgemeinen in üblichen Entgasungsextrudern zur Herstellung von Extrusionsformteilen wie beispielsweise Extrusionsfolien, Profilen, Platten oder Blaskörpern. Der Temperaturbereich des Extrusionsvorgangs liegt hierbei zwischen etwa 220° C und 280° C.

Die Spritzgußverarbeitung der Polycarbonat-Ruß-Graphitmischungen, welche wie oben beschrieben als Granulat anfallen, mit dem thermoplastischen Polyalkylenterephthalat und gegebenenfalls mit weiterem thermoplastischem Polycarbonat erfolgt im allgemeinen bei Temperaturen von etwa 270° C bis etwa 300° C in üblichen Spritzgußmaschinen, wobei zu beachten ist, daß die Gesamtmischung mindestens 15 Gew.-% an thermoplastischen Polyalkylenterphthalaten, bezogen auf Gesamtgewicht der Komponenten a) + b) + c), vorzugsweise enthält.

Mischungen aus thermoplastischen Polycarbonaten und thermoplastischen Polyalkylenterephthalaten und daraus hergestellte Formkörper und Folien sind bekannt (siehe beispielsweise EP-OS 0 120 394 (Le A 22 232-EP), EP-OS 0 143 352 (Le A 22 591-EP) und EP-OS 0 016 225 (Le A 21 855-EP) und in und zu diesen europäischen Offenlegungsschriften jeweils angezogene Literatur).

Bekannt sind auch Polycarbonatfolien mit einem Gehalt an Ruß oder Graphit (siehe beispielsweise EP-OS 0 143 352 (Le A 22 591) und EP-OS 0 141 310 (Le A 22 590) und in und zu diesen europäischen Offenlegungsschriften jeweils angezogene Literatur).

Aus der EP-OS 0 032 375 ist der kombinierte Einsatz von Ruß und Graphit in Polyetheresterelastomeren beschrieben.

Den thermoplastischen Polycarbonaten und den thermoplastischen Polyalkylenterephthalaten können noch die für thermoplastische Polycarbonate bzw. thermoplastische Polyalkylenterephthalate bekannten Stabilisatoren gegen Hitze, Feuchtigkeit und Luft zugesetzt sein.

Beispiele

Herstellungsvorschrift für Grundcompounds

Aus Bisphenol-A-Polycarbonat-Granulat $\eta_{rel}$ 1300, welches mit 0,07 Gew.-% Tris-(2-ethyl-oxetanyl-2)-methyl-phosphi stabilisiert ist, und Leitruß. (Geeignet sind Leitruße, die außer einer sehr gerinen Primärteilchengröße eine große äußere und inner Oberfläche, d.h. hohe Porosität und somit hohe BET-Oberflächen bei der $N_2$-Adsorption und hohe Dibutylphthalat (DBP)-Adsorptionswerte aufweisen und weiterhin hochstrukturiert sind, d.h. starke Agglomerationen oder Agglomerationen von einzelnen Rußteilchen zu größeren Gebilden wie z.B. Ketten aufweisen, wobei die BET-Oberfläche der Ruße im allgemeinen größer sind als 20 $m^2/g$ und die DBP-Adsorption oberhalb von 40 ml pro 100 g Ruß liegen) und Graphitpulver, wobei Graphitpulver mit mittlerer Teilchengröße bis zu 1 mm bevorzugt und insbesondere bis zu 0,5 mm verwendet werden, wird auf einem Compoundierextruder mit Entgasung unter dosierter Zugabe der Komponenten Polycarbonat, Ruß und Graphit der Grundcompound hergestellt.

Die Temperatur im Aufschmelzbereich des Compoundierextruders liegt bei 280° C.

Das bei diesem Prozeß anfallende Granulat im nachfolgenden Grundcoumpound 1.1 bzw. Grundcoumpound 2.1 genannt ist Grundlage der Folienextrusion bzw. des Spritzgießens.

1. Herstellung einer antistatischen Extrusionsfolie

1.1 Herstellung des Grundcompounds, wie vorstehend beschrieben, aus

Polycarbonat          80 Gew.-%,

Leitruß          12 Gew.-% und

Graphit          8 Gew.-%.

1.2 Zur Herstellung des Foliengranulatgemisches wird diesem Grundcompound Polybutylenterephthalt im Mischungsverhältnis 5:1 auf geeigneten Mischern (Taumel-, Konusschnecken-Mischer) zugegeben und nach inniger Durchmischung direkt aus diesem Granulatgemisch die Folie extrudiert.

Die Extrusionstemperatur soll, wegen der Zugabe von Polybutylenterephthalat in einem Temperaturbereich von 230° C-260° C liegen. Die Temperatur der nachfolgenden Glattwerke (Auftragswalze bei Folienextrusion) soll hierbei nicht über 60° C liegen um Kristallisationen in der Folie zu vermeiden. Die so erhaltene Folie hat folgende Zusammensetzung:

Polycarbonat          66,66 Gew.-%

Polybutylenterephthalat          16,66 Gew.-%

Leitruß          9,99 Gew.-%

Graphit          6,69 Gew.-5

A. Mechanische Kennwerte von 1.2

**Prüfungen Maßeinheit Prüfvorschrift**

| Reiß-festig-keit | MPa | ISO/R 527 | 66 |
|---|---|---|---|
| | | DIN 53 455 | |
| Reiß-dehnung | % | DIN 53 455 | 6 |
| Streck-spannung | MPa | DIN 53 455 | 69 |
| Dichte | g/cm$^2$ | | 1,28 |

B. Elektrische Kennwerte von 1.2
Spez. Oberflächenwiderstand $\rho$S        $10^4$ Ohm
Spez. Durchgangswiderstand $\rho$D        $10^2$ Ohm.cm

2. Herstellung einer leitfähigen Extrusionsfolie

Ausgangsstoff für die Herstellung einer leitfähigen Extrusionsfolie ist ebenfalls ein Grundcompound, der gemäß Herstellungsvorschrift für Grundcompounds hergestellt wird.

Das Mischungsverhältnis von Polycarbonat Ruß und Graphit wurde gemäß nachfolgender Zusammensetzung eingestellt.

2.1 Herstellung des Grundcompounds aus
Polycarbonat        70 Gew.-%
Leitruß        18 Gew.-%
Graphit        12 Gew.-%

2.2 Zur Herstellung der Extrusionsfolie werden.- 80 Gew.-% Grundcompound 2.1 mit 20 Gew.-% Polybutylenterephthalat abgemischt und wie unter 1.2 beschrieben zu einer Folie extrudiert.

Die so erhaltene Folie hat folgende Zusammensetzung:
Polycarbonat        56,000 Gew.-%
Polybutylenterephthalat        20,00 Gew.-%
Leitruß        14,40 Gew.-%
Graphit        9,60 Gew,-%

3. Herstellung antistatischer Spritzgußmassen

Ausgangsstoffe zur Herstellung antistatischer Spritzgußmassen sind die beiden Grundcompounde 1.1 und 2.1, die je nach der gewünschten antistatischen Eigenschaften mit 20 Gew.-% bzw. 30 Gew.-% Polybutylenterephthalat abgemischt werden. Verarbeitungstemperatur 260° C-280° C.

3.1 Zusammensetzung der Spritzgußmassen aus Grundcompound 1.1

| Polycarbonat | 64,00 Gew.-% |
|---|---|
| Polybutylenterephthalat | 20,00 Gew.-% |
| Leituß | 9,60 Gew.-% |
| Graphit | 6,40 Gew.-% |

3.2 Zusammensetzung der Spritzgußmasse aus Grundcompound 2.1

| Polycarbonat | 49,00 Gew.-% |
|---|---|
| Polybutylenterephthalat | 30,00 Gew.-% |
| Leitruß | 12,60 Gew.-% |
| Graphit | 8,40 Gew.-% |

## Patentansprüche

1. Verfahren zur Herstellung von kohlenstoffhaltigen Formkörpern nach dem Extrusionsverfahren oder nach dem Spritzgußverfahren, die
   a) 40 Gew.-% bis 85 Gew.-% an thermoplastischen Polycarbonaten,
   b) 35 Gew.-% bis 5 Gew.-% an thermoplastischen Polyalkylenterephthalaten, und
   c) 35 Gew.-% bis 10 Gew.-% an Ruß und Graphit enthalten,

   wobei das Gewichtsverhältnis von Ruß zu Graphit zwischen 5:1 und 1:3, und wobei die Summe der Gewichtsprozente a) + b) + c) jeweils 100 Gew.-% ist, dadurch gekennzeichnet, daß man das thermoplastische Polycarbonat mit dem Ruß und dem Graphit vermischt, dieses Gemisch zu Granulat verarbeitet und erst danach der Zusatz des thermoplastischen Polyalkylenterephthalats erfolgt und man zu den gewünschten Formkörpern extrudiert oder spritzgießt.

2. Verfahren zur Herstellung von Kohlenstoff-haltigen Formkörpern nach dem Spritzgußverfahren, die
   a) 40 Gew.-% bis 75 Gew.-% an thermoplastischen Polycarbonaten,
   b) 35 Gew.-% bis 15 Gew.-% an thermoplastischen Polyalkylenterephthalaten und
   c) 35 Gew.-% bis 10 Gew.-% an Ruß und Graphit enthalten, wobei das Gewichtsverhältnis Ruß zu Graphit zwischen 5:1 und 1:3 liegt und wobei die Summe der Gewichtsprozente jeweils 100 Gew.-% ist,

   dadurch gekennzeichnet, daß man das thermoplastische Polycarbonat mit dem Ruß und dem Graphit vermischt, dieses Gemisch zu Ganulat verarbeitet und erst danach der Zusatz des thermoplastischen Polyalkylenterephthalats erfolgt und man zu den gewünschten Formkörpern spritzgießt.

## Claims

1. A process for the production by extrusion or injection moulding of carbon-containing mouldings containing
   a) 40 to 85% by weight thermoplastic polycarbonates,
   b) 35 to 5% by weight thermoplastic polyalkylene terephthalates and
   c) 35 to 10% by weight carbon black and graphite,
   the ratio by weight of carbon black to graphite being from 5:1 to 1:3 and the sum of the percentages by weight of a) + b) + c) being 100% by weight, characterized in that the thermoplastic polycarbonate is mixed with the carbon black and the graphite, the resulting mixture is granulated, the thermoplastic polyalkylene terephthalate is then added and the granules are extruded or injection-moulded to the desired mouldings.

2. A process for the production by injection moulding of mouldings containing
   a) 40 to 75% by weight thermoplastic polycarbonates,
   b) 35 to 15% by weight thermoplastic polyalkylene terephthalates and
   c) 35 to 10% by weight carbon black and graphite,
   the ratio by weight of carbon black to graphite being from 5:1 to 1:3 and the sum of the percentages by weight being 100% by weight, characterized in that the thermoplastic polycarbonate is mixed with the carbon black and the graphite, the resulting mixture is granulated, the thermoplastic polyalkylene terephthalate is then added and the granules are injection-moulded to the desired mouldings.

## Revendications

1. Procédé d'obtention de produits moulés contenant du carbone par le principe d'extrusion ou le principe de moulage par injection, qui contiennent

   a) 40 % en poids à 85 % en poids de polycarbonates thermoplastiques,

   b) 35 % en poids à 5 % en poids de polyalkylènetéréphtalates thermoplastiques et

   c) 35 % en poids à 10 % en poids de noir de fumée et de graphite,

le rapport en poids du noir de fumée au graphite ayant une valeur comprise entre 5:1 et 1:3 et la somme des pourcentages en poids a) + b) + c) étant dans chaque cas égale à 100 % en poids, caractérisé en ce qu'on mélange le polycarbonate thermoplastique avec le noir de fumée et le graphite, on transforme ce mélange en granules et on n'effectue qu'ensuite l'addition du polyalkylènetéréphtalate thermoplastique et on effectue un extrusion ou un moulage par injection pour obtenir les produits moulés désirés.

2.  Procédé d'obtention de produits moulés contenant du carbone selon le principe du moulage par injection, qui contiennent

   a) 40 % en poids à 75 % en poids de polycarbonates thermoplastiques,

   b) 35 % en poids à 15 % en poids de polyalkylènetéréphtalates thermoplastiques et

   c) 35 % en poids à 10 % en poids de noir de fumée et de graphite, le rapport en poids du noir de fumée au graphite étant situé entre 5:1 et 1:3 et la somme des pourcentages en poids étant dans chaque cas égale à 100 % en poids,

caractérisé en ce qu'on mélange le polycarbonate thermoplastique avec le noir de fumée et le graphite, on transforme ce mélange en granules et on effectue seulement ensuite l'addition de polyalkylènetéréphtalates thermoplastique et on moule par injection en produits désirés.